# FASCICULE DE BREVET EUROPEEN

(11) **EP 0 821 191 B1**
(45) Date de publication et mention de la délivrance du brevet: **14.03.2001**
(21) Numéro de dépôt: 97401765.9
(22) Date de dépôt: 22.07.1997
(51) Int. Cl.: F16K 1/22, F16K 41/04

(54) **Vanne, notamment pour tubulure de ligne d'échappement**
Ventil, insbesondere für eine Auspuffleitung
Valve, especially for an exhaust gas conduct

(30) Priorité: 26.07.1996 FR 9609471
(43) Date de publication de la demande: 28.01.1998
(73) Titulaire: ECIA - EQUIPEMENTS ET COMPOSANTS POUR L'INDUSTRIE AUTOMOBILE, F-25400 Audincourt (FR)
(72) Inventeur: Barnabe, Jean-Pierre, 25700 Valentigney (FR)
(74) Mandataire: Obolensky, Michel

(56) Documents cités:
- DD-A- 283 194
- DE-A- 3 707 904

## Description

La présente invention concerne une vanne du type comportant un corps tubulaire et un volet d'obturation monté rotatif à l'intérieur du corps autour d'un axe de rotation sensiblement diamétral, le volet d'obturation étant solidaire de deux tourillons montés rotatifs autour dudit axe dans des paliers.

Une telle vanne est destinée en particulier à une tubulure de ligne d'échappement de véhicule automobile.

Certaines lignes d'échappement de véhicule automobile sont munies d'une tubulure principale reliée à des premiers organes d'échappement et d'une tubulure secondaire, en dérivation, reliée à des seconds organes d'échappement ayant, par exemple, des caractéristiques acoustiques et/ou catalytiques différentes de celles des premiers organes d'échappement.

Les gaz d'échappement sont canalisés dans l'une ou l'autre des tubulures principale ou secondaire par fermeture de vannes agencées dans ces tubulures.

Dans les vannes connues, le volet d'obturation est porté par un arbre ou une paire de tourillons montés rotatifs dans des perçages de la paroi du corps tubulaire formant paliers.

Une telle vanne pose des problèmes d'étanchéité au niveau des paliers ainsi que des problèmes de maîtrise des jeux axiaux de l'arbre ou des tourillons dans les paliers. Ces jeux axiaux provoquent des bruits indésirables et conduisent à une usure prématurée des paliers.

De plus, les températures élevées de l'ordre de 1000°C résultant du passage des gaz d'échappement chauds provoquent la dilatation des différents organes constituant la vanne, ce qui conduit à des variations indésirables du couple de manoeuvre.

Le document DE-A-3 707 904 décrit une vanne selon le préambule de la revendication 1.

L'invention a pour but d'apporter une solution aux problèmes mentionnés ci-dessus et en particulier de fournir une vanne fonctionnant de manière satisfaisante à des températures élevées et avec une bonne étanchéité.

A cet effet, l'invention a pour objet une vanne du type précité, caractérisée en ce que les paliers comportent chacun, d'une part, un support annulaire solidaire du corps et débouchant à l'intérieur de celui-ci et, d'autre part, un coussinet interposé entre le tourillon et le support annulaire, les tourillons et les supports annulaires comportant des surfaces d'appui axial sur les coussinets entre lesquelles les coussinets sont pressés sous l'effet des tourillons reliés et maintenus précontraints l'un vers l'autre par le volet d'obturation.

Suivant des modes particuliers de réalisation, la vanne peut comporter l'une ou plusieurs des caractéristiques suivantes :
- chaque support annulaire est évasé vers l'extérieur, la surface latérale intérieure de chaque support coopérant avec la paroi latérale du coussinet correspondant pour former une desdites surfaces d'appui axial et chaque tourillon comporte un tronçon cylindrique délimitant une surface de portée reçue dans le coussinet et une tête qui prolonge axialement vers l'extérieur ledit tronçon cylindrique et est reliée à celui-ci par un épaulement, lequel épaulement coopére avec une extrémité du coussinet pour former l'autre surface d'appui axial;
- chaque coussinet comporte une surépaisseur extérieure à son extrémité en appui sur ledit épaulement;
- une surface plane d'extrémité du coussinet est exposée à l'intérieur du corps tubulaire et le volet d'obturation comporte de part et d'autre d'une zone de fixation avec chaque tourillon des bords sensiblement rectilignes effleurant ladite surface exposée dudit coussinet;
- la surface d'extrémité du coussinet exposée à l'intérieur du corps tubulaire est recouverte d'une enveloppe de protection;
- chaque coussinet comporte un treillis métallique chargé d'un matériau à faible coefficient de frottement, notamment du graphite;
- chaque tourillon comporte, à une extrémité dirigée vers l'intérieur du corps, une chape de liaison du volet d'obturation;
- le volet d'obturation est déformé de part et d'autre de zones de fixation retenues dans lesdites chapes par décalage angulaire autour de son axe de rotation des zones de fixation par rapport au plan principal du volet;
- les supports annulaires sont venus de matière avec le corps tubulaire;
- elle comporte un arceau de commande chevauchant extérieurement ledit corps tubulaire et dont les extrémités sont reliées aux extrémités extérieures de chaque tourillon;

L'invention sera mieux comprise à la lecture de la description qui va suivre donnée uniquement à titre d'exemple et faite en se référant aux dessins sur lesquels :
- La figure 1 est une vue en coupe longitudinale d'une vanne selon l'invention ;
- La figure 2 est une vue en bout avec arrachement partiel de la vanne de la figure 1 ; et
- La figure 3 est une vue en coupe longitudinale de la vanne prise suivant la ligne III-III de la figure 1.

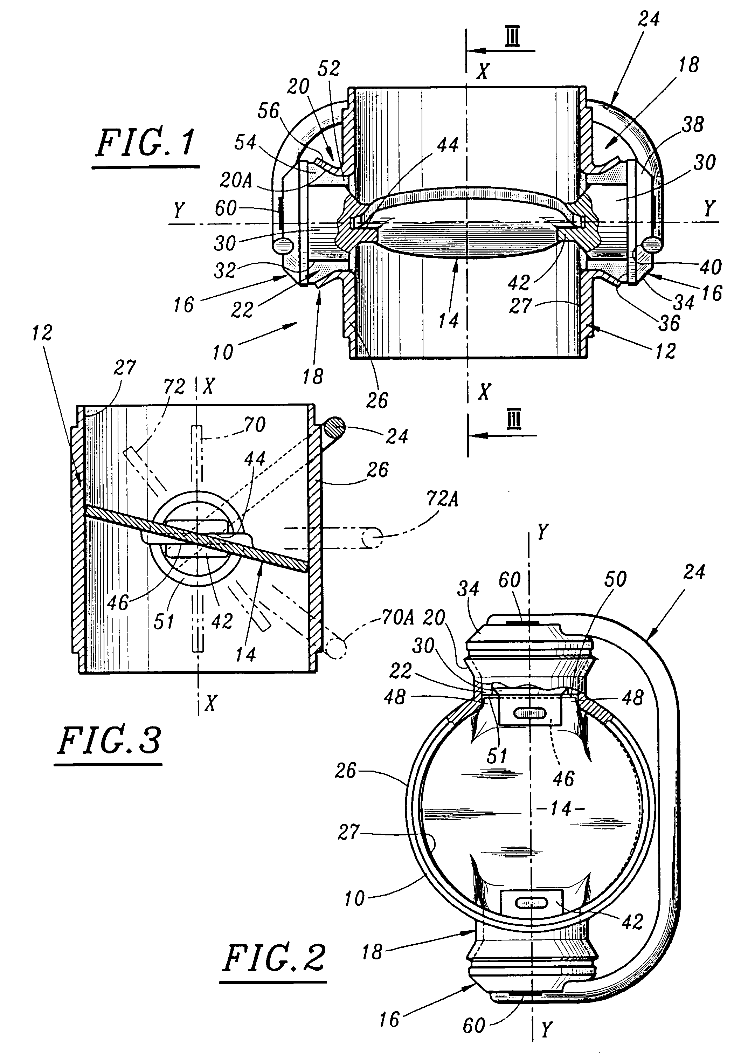

Sur les figures 1 à 3 est représentée une vanne 10 selon l'invention destinée à être montée sur un tronçon de tubulure d'échappement de véhicule automobile.

Elle comporte essentiellement un corps tubulaire 12 et un volet d'obturation 14 solidaire de deux tourillons 16 montés rotatifs dans des paliers 18. Ces derniers comportent chacun un support annulaire 20 venu de matière avec le corps 12 et un coussinet 22 interposé entre le support 20 et le tourillon 16. Un arceau de commande 24 est fixé aux extrémités extérieures des tourillons 16.

Le corps 12 comporte un tronçon tubulaire 26 d'axe X-X délimitant intérieurement un conduit cylindrique 27 de section circulaire.

Les deux supports annulaires 20 sont diamétralement opposés sur le tronçon tubulaire 26 et débouchent de part et d'autres. Ils sont de révolution autour d'un axe Y-Y qui s'étend suivant un diamètre du corps 12 et définit un axe de rotation pour le volet 14. Les supports 20 sont évasés vers l'extérieur de sorte que leur surface latérale intérieure 20A est sensiblement tronconique et forme une surface d'appui axial pour les coussinets 22.

Chaque tourillon 16 comporte un tronçon cylindrique 30 délimitant une surface de portée 32 reçue dans le coussinet 22. Une tête 34 prolonge extérieurement le tronçon cylindrique 30. Elle est délimitée par un épaulement 36, reliant la tête au tronçon cylindrique 30. L'épaulement 36 forme une surface d'appui suivant l'axe Y-Y sur l'extrémité du coussinet 22.

La face d'extrémité de la tête 34 est bordée par un chanfrein 38 et est traversée diamétralement par une rainure 40 de forme biconique, pour la réception d'une extrémité de l'arceau 24. La rainure 40 est évasée à ses deux extrémités et présente dans sa partie médiane une zone de moindre profondeur, dans laquelle est fixée l'arceau 24.

Chaque tourillon 16 comporte une chape 42 prolongeant axialement le tronçon cylindrique 30 vers l'intédu corps 12. Cette chape délimite une gorge 44 dans laquelle est reçue une zone de fixation 46 du volet.

Le volet 14 a comme représenté sur la figure 2 une forme générale de disque faiblement elliptique de dimensions adaptées pour être contenu dans le conduit 27. Il comporte de part et d'autre de la zone de fixation 46 des prolongements radiaux 48. Ces derniers délimitent avec la zone 46 un bord rectiligne 50 s'étendant tangentiellement au disque délimitant le volet. Ainsi, le volet 14 comporte deux bords rectilignes 50 diamétralement opposés s'étendant perpendiculairement à l'axe de rotation Y-Y. Les extrémités des bords 50 effleurent une surface d'extrémité plane 51 des coussinets, qui est exposée à l'intérieure du corps 12, comme représenté sur la figure 2.

Les zones de fixation 46 et les prolongements 48 sont, comme représenté sur la figure 3, décalés angulairement autour de l'axe Y-Y par rapport au plan principal du volet. Ce décalage angulaire est par exemple de 15°. Il est obtenu par déformation plastique du volet avant montage. Ce décalage facilite le sertissage du volet dans les chapes 42, le sertissage étant effectué alors que les chapes s'étendent perpendiculairement à l'axe du conduit.

Chaque coussinet 22 a la forme générale d'un manchon à surface latérale intérieure cylindrique. Le diamètre intérieur des coussinets est sensiblement égal au diamètre extérieur du tronçon 30.

Chaque coussinet comporte deux tronçons successifs, l'un 52, disposé vers le conduit interne 27 est délimité extérieurement par une surface latérale cylindrique, l'autre 54, disposé vers l'extérieur du corps 12 est délimité extérieurement par une surface latérale tronconique 56 évasée vers l'extrémité du coussinet. Ainsi, le coussinet 22 comporte une surépaisseur extérieure.

Les coussinets sont réalisés dans un matériau composite formé d'un treillis métallique chargé d'un matériau à faible coefficient de frottement. Le treillis métallique est par exemple tricoté à partir de fils en acier inoxydable. Le matériau à faible coefficient de frottement peut être formé à base de graphite associé à un liant.

Les coussinets ainsi formés résistent aux températures élevées et sont susceptibles de se déformer légèrement pour épouser les formes des tourillons 16 et des supports 20. Cette déformation assure une compensation des variations dimensionnelles résultant de la dilatation.

L'arceau de commande 24 a la forme générale d'un U. Les extrémités des branches latérales de l'arceau sont reçues dans les rainures 40 et y sont fixées par des soudures 60 réalisées dans la partie médiane des rainures 40.

Afin d'assurer la fabrication de la vanne, on utilise un tube afin de former le corps 12. Les supports annulaires 20 sont obtenus par déformation et perçage de ce tube. A cet effet, on forme d'abord sur la paroi latérale du tube une bosse extérieure par emboutissage depuis l'intérieur du tube. Cette bosse est ensuite percée à son sommet. La canule ainsi formée est alors déformée par emboutissages successifs jusqu'à former les supports annulaires 20 évasés.

Pour assurer le montage de la vanne, on dispose d'abord dans le conduit 27, le volet 14 préalablement déformé de part et d'autre de ses zones de fixation 46. Les tourillons 16 équipés des coussinets 22 sont ensuite introduits dans les supports 20, les zones de fixation 46 du volet étant reçues dans les gorges 44 des tourillons lors de la mise en place de ces derniers dans les supports. Les tourillons 16 sont ensuite pré-contraints l'un vers l'autre par application d'une charge sur la tête 34 de chacun d'eux. Les tourillons étant ainsi chargés, le volet 14 est serti par déformation de la chape 42. A cet effet, des lumières oblongues non représentées sont ménagées dans les zones de fixation 46 du volet afin de permettre un déplacement de la matière des chapes 42 dans ces ouvertures. L'arceau de commande 24 est enfin mis en place et soudé.

Les tourillons sont ainsi reliés et maintenus précontraintes l'un vers l'autre par le volet 14. Dans ces conditions, les tourillons 16 pressent la surface latérale des coussinets 22 contre les surfaces tronconiques 20A. Ainsi, les coussinets sont comprimés axialement entre deux surfaces d'appui axial formées d'une part par l'épaulement 36 et d'autre part par la surface latérale intérieure 20A des supports annulaires.

L'arceau de commande 24 permet le déplacement du volet 14 entre une position d'obturation complète du conduit 27 et une position d'ouverture dans laquelle le volet s'étend longitudinalement dans ce conduit. Sur les figures 1 et 2, le volet est dans sa position d'obturation. Sur la figure 3, le volet est représenté en traits pleins dans sa position d'obturation. Il est représenté en traits mixtes dans sa position d'ouverture complète, repérée par la référence 70 et dans une position d'ouverture partielle repérée par la référence 72. Les positions correspondantes de l'arceau sont repérées par les références 70A et 72A.

L'arceau 24 assure également un maintien en position des deux tourillons l'un par rapport à l'autre. Il évite en particulier une déformation du volet lors de la manoeuvre de la vanne, même lorsque celle-ci fonctionne à haute température.

On comprend que le montage précontraint des deux tourillons provoque un pressage permanent des coussinets. Ainsi, ces derniers assurent d'une part une bonne étanchéité des paliers 18 et d'autre part garantissent un couple d'actionnement de la vanne peu sensible à la température.

Par ailleurs, les extrémités du bord rectiligne 50 effleurent la surface plane 51 d'extrémité des coussinets lors du déplacement du volet. Cet agencement garantit une bonne étanchéité de la vanne au voisinage des paliers lorsque le volet est en position d'obturation, comme cela est représenté sur la figure 2.

En variante non représentée, l'extrémité de chaque coussinet 22 en regard du conduit 27 comporte une enveloppe métallique protégeant la partie exposée du coussinet des gaz circulant dans le conduit. Cette enveloppe est formée par exemple par une cuvette annulaire recouvrant la face d'extrémité 51 et une partie adjacente des parois latérales intérieure et extérieure du coussinet. L'épaisseur du coussinet peut être réduite dans la zone recouverte par l'enveloppe métallique de sorte que cette enveloppe se raccorde tangentiellement à la partie courante non enveloppée du coussinet.

Il est à noter que le volet, formé par une simple tôle supportée par les deux tourillons offre, en position d'ouverture totale une très faible résistance au passage des gaz circulant dans le conduit.

## Revendications

1. Vanne (10) du type comportant un corps tubulaire (12) et un volet d'obturation (14) monté rotatif à l'intérieur du corps (12) autour d'un axe (Y-Y) de rotation sensiblement diamétral, le volet d'obturation (14) étant solidaire de deux tourillons (16) montés rotatifs autour dudit axe (Y-Y) dans des paliers (18), les paliers (18) comportant chacun, d'une part, un support annulaire (20) solidaire du corps (12) et débouchant à l'intérieur de celui-ci et, d'autre part, un coussinet (22) interposé entre le tourillon (16) et le support annulaire (20), les supports annulaires (20) comportant des surfaces (20A) d'appui axial sur les coussinets (22), caractérisée en ce que les tourillons (16) comportent des surfaces (36) d'appui axial sur les coussinets (22), les coussinets (22) étant pressés entre les surfaces (20A, 36) d'appui axial des tourillons (16) et des supports annulaires (20) sous l'effet des tourillons (16) reliés et maintenus précontraints l'un vers l'autre par le volet d'obturation (14).

2. Vanne selon la revendication 1, caractérisée en ce que chaque support annulaire (20) est évasé vers l'extérieur, la surface latérale intérieure (20A) de chaque support (20) coopérant avec la paroi latérale du coussinet correspondant (22) pour former une desdites surfaces d'appui axial et en ce que chaque tourillon (16) comporte un tronçon cylindrique (30) délimitant une surface de portée (32) reçue dans le coussinet (22) et une tête (34) qui prolonge axialement vers l'extérieur ledit tronçon cylindrique (30) et est reliée à celui-ci par un épaulement (36), lequel épaulement coopère avec une extrémité du coussinet (22) pour former l'autre surface d'appui axial.

3. Vanne selon la revendication 2, caractérisée en ce que chaque coussinet (22) comporte une surépaisseur extérieure à son extrémité en appui sur ledit épaulement (36).

4. Vanne selon l'une quelconque des revendications précédentes, caractérisée en ce qu'une surface plane d'extrémité (51) du coussinet (22) est exposée à l'intérieur du corps tubulaire (12), et en ce que le volet d'obturation (14) comporte, de part et d'autre d'une zone de fixation (46) avec chaque tourillon (16), des bords (50) sensiblement rectilignes s'étendant perpendiculairement à l'axe de rotation (Y-Y) effleurant ladite surface exposée (51) dudit coussinet (22).

5. Vanne selon la revendication 4, caractérisée en ce que la surface d'extrémité du coussinet (22) exposée à l'intérieur du corps tubulaire est recouverte d'une enveloppe de protection.

6. Vanne selon l'une quelconque des revendications précédentes, caractérisée en ce que chaque coussinet (22) comporte un treillis métallique chargé d'un matériau à faible coefficient de frottement, notamment du graphite.

7. Vanne selon l'une quelconque des revendications précédentes, caractérisée en ce que chaque tourillon (16) comporte, à une extrémité dirigée vers l'intérieur du corps (12), une chape (42) de liaison du volet d'obturation (14).

8. Vanne selon la revendication 7, caractérisée en ce que le volet d'obturation (14) est déformé de part et d'autre de zones de fixation (46) retenues dans lesdites chapes (42) par décalage angulaire autour de son axe de rotation (Y-Y) des zones de fixation (46) par rapport au plan principal du volet (14).

9. Vanne selon l'une quelconque des revendications précédentes, caractérisée en ce que les supports annulaires (20) sont venus de matière avec le corps tubulaire (12).

10. Vanne selon l'une quelconque des revendications précédentes, caractérisée en ce qu'elle comporte un arceau de commande (24) chevauchant extérieurement ledit corps tubulaire (12) et dont les extrémités sont reliées aux extrémités extérieures de chaque tourillon (16).

## Patentansprüche

1. Ventil (10) umfassend einen rohrförmigen Körper (12) und eine Absperrklappe (14), welche im Inneren des Körpers (12) um eine im wesentlichen diametrale Schwenkachse (Y-Y) schwenkbar gelagert ist, wobei die Absperrklappe (14) fest verbunden ist mit zwei Lagerzapfen (16), die schwenkbar um die genannte Achse (Y-Y) in Lagern (18) gelagert sind, wobei jedes der Lager (18) jeweils einerseits einen ringförmigen Träger (20) umfasst, welcher mit dem Körper (12) fest verbunden ist und in dessen Inneres einmündet und andererseits eine Lagerhülse (22), die zwischen dem Lagerzapfen (16) und dem ringförmigen Träger (20) angeordnet ist, wobei die ringförmigen Träger (20) axiale Stützflächen (20 A) zur Abstützung an den Lagerhülsen (22) aufweisen, dadurch gekennzeichnet, dass die Lagerzapfen (16) Stützflächen (36) zur axialen Abstützung gegen die Lagerhülsen (22) aufweisen, wobei die Lagerhülsen zwischen den axialen Stützflächen (20 A, 36) der Lagerzapfen (16) und der ringförmigen Träger (20) gepresst werden durch den Einfluss der Lagerzapfen (16), eingebunden und unter Vorspannung stehend, jeweils der eine gegen den anderen Teil durch die Absperrklappe (14).

2. Ventil nach Anspruch 1, dadurch gekennzeichnet, dass jeder ringförmige Träger (20) nach außen ausfallend ausgebildet ist, wobei die innere seitliche Fläche (20 A) jedes Trägers (20) mit der seitlichen Wandung der entsprechenden Lagerhülse (22) zusammenwirkt um die genannten axialen Stützflächen zu bilden, und dass jeder Lagerzapfen (16) einen zylindrischen Abschnitt (30) aufweist, der eine Trägerfläche (32) begrenzt, die in der Lagerhülse (22) aufgenommen ist und einen Kopf (34) in axialer Verlängerung des genannten zylindrischen Abschnitts (30) nach außen, welcher mit diesem über eine Schulter (36) verbunden ist, wobei diese Schulter mit einer Extremität der Lagerhülse zusammenwirkt und so die andere axiale Stützfläche bildet.

3. Ventil nach Anspruch 2, dadurch gekennzeichnet, dass jede Lagerhülse (22) eine äußere Überdicke an ihrem an der genannten Schulter (36) abgestützten Ende aufweist.

4. Ventil nach einem der vorhergehenden Ansprüche, dadurch gekennzeichnet, dass eine ebene Endfläche (51) der Lagerhülse (22) in das Innere des rohrförmigen Körpers (12) hineinragt, und dass die Absperrklappe (14) auf beiden Seiten einer Befestigungszone (46) mit jedem Lagerzapfen (16) im wesentlichen geradlinige Ränder (50) aufweist, die sich senkrecht zur Rotationsachse (Y-Y) erstrecken und die genannte exponierte Fläche (51) der Lagerhülse (22) leicht berühren.

5. Ventil nach Anspruch 4, dadurch gekennzeichnet, dass die endseitige Fläche der Lagerhülse (22), die in das Innere des rohrförmigen Körpers hineinragt, mit einer Schutzbeschichtung bedeckt ist.

6. Ventil nach einem der vorhergehenden Ansprüche, dadurch gekennzeichnet, dass jede Lagerhülse (22) ein metallisches Gitter umfasst, beladen mit einem Material mit geringem Reibungskoeffizienten, insbesondere mit Graphit.

7. Ventil nach einem der vorhergehenden Ansprüche, dadurch gekennzeichnet, dass jeder Lagerzapfen (16) an einem in Richtung des Inneren des Körpers (12) ausgerichteten Ende ein Verbindungselement (42) zu der Absperrklappe (14) aufweist.

8. Ventil nach Anspruch 7, dadurch gekennzeichnet, dass die Absperrklappe (14) auf beiden Seiten von Befestigungszonen (46) deformiert ist, die in den genannten Verbindungselementen (42) durch Winkelversatz in Richtung der Rotationsachse (Y-Y) der Befestigungszonen (46) in Bezug auf eine Hauptebene durch die Absperrklappe (14) gehalten werden.

9. Ventil nach einem der vorhergehenden Ansprüche, dadurch gekennzeichnet, dass die ringförmigen Träger (20) aus dem Material des rohrförmigen Körpers (12) gebildet sind.

10. Ventil nach einem der vorhergehenden Ansprüche, dadurch gekennzeichnet, dass es einen Betätigungsbügel (24) umfasst, der außen den genannten rohrförmigen Körper (12) übergreift und dessen Enden mit den äußeren Enden jedes der Lagerzapfen (16) verbunden sind.

## Claims

1. Valve (10) of the type comprising a tubular body (12) and a sealing flap (14), which is mounted rotatably in the interior of the body (12) about an axis (Y-Y) of rotation which is substantially diametral, the sealing flap (14) being integral with two journals (16) which are mounted rotatably about said axis (Y-Y) in bearings (18), the bearings each comprising, on the one hand, an annular support (20) which is integral with the body (12) and opening into the interior of the latter and, on the other hand, a bush (22) which is inserted between the journal (16) and the annular support (20), the annular supports (20) comprising axial bearing surfaces (20A) on the bushes (22), characterised in that the journals (16) comprise axial bearing surfaces (36) on the bushes (22), the bushes (22) being compressed between the axial bearing surfaces (20A, 36) of the journals (16) and of the annular supports (20) by the effect of the journals (16) which are connected and kept pre-stressed one towards the other by the sealing flap (14).

2. Valve according to claim 1, characterised in that each annular support (20) widens towards the exterior, the interior lateral surface (20A) of each support (20) co-operating with the lateral wall of the corresponding bush (22) in order to form one of said axial bearing surfaces and in that each journal (16) comprises a cylindrical section (30), which delimits a running surface (32) received in the bush (22), and a head (34), which extends said cylindrical section (30) axially towards the exterior and is connected to said section by a shoulder (36), which shoulder co-operates with an end of the bush (22) in order to form the other axial bearing surface.

3. Valve according to claim 2, characterised in that each bush (22) comprises an exterior excessive thickness at its end resting on said shoulder (36).

4. Valve according to any of the preceding claims, characterised in that a flat end surface (51) of the bush (22) is exposed in the interior of the tubular body (12) and in that the sealing flap (14) comprises, on both sides of a fixing area (46) with each journal (16), substantially rectilinear edges (50) extending perpendicularly to the axis of rotation (Y-Y), touching said exposed surface (51) of said bush (22).

5. Valve according to claim 4, characterised in that the end surface of the bush (22) exposed in the interior of the tube body is covered with a protective shell.

6. Valve according to any of the preceding claims, characterised in that each bush (22) comprises a metallic lattice filled with a material having a low coefficient of friction, in particular graphite.

7. Valve according to any of the preceding claims, characterised in that each journal (16) comprises, at an end directed towards the interior of the body (12), a linking cap (42) of the sealing flap (14).

8. Valve according to claim 7, characterised in that the sealing flap (14) is deformed on both sides of the fixing areas (46), which are retained in said caps (42), by angular displacement about its axis of rotation (Y-Y) of the fixing areas (46) with respect to the main plane of the flap (14).

9. Valve according to any of the preceding claims, characterised in that the annular supports (20) are made in one piece with the tubular body (12).

10. Valve according to any of the preceding claims, characterised in that it comprises a control hoop (24) which overlaps said tubular body (12) on the exterior and the ends of which are connected to the exterior ends of each journal (16).
